(19) Europäisches Patentamt

European Patent Office

Office européen des brevets

(11) Veröffentlichungsnummer: **0 326 803 B1**

(12) **EUROPÄISCHE PATENTSCHRIFT**

(45) Veröffentlichungstag der Patentschrift:
28.08.91 Patentblatt 91/35

(21) Anmeldenummer: 89100181.0

(22) Anmeldetag: 05.01.89

(51) Int. Cl.⁵: $G06F\ 9/38$, $G06F\ 12/06$

(54) **Anordnung zur Erweiterung eines Befehlsspeicherbereichs.**

(30) Priorität: 18.01.88 DE 3801208

(43) Veröffentlichungstag der Anmeldung:
09.08.89 Patentblatt 89/32

(45) Bekanntmachung des Hinweises auf die
Patenterteilung:
28.08.91 Patentblatt 91/35

(84) Benannte Vertragsstaaten:
AT CH DE FR GB IT LI SE

(56) Entgegenhaltungen:
MICROPROCESSORS AND MICROSYSTEMS,
Band 9, Nr. 1, Januar/Februar 1985, Seiten
21-23, Butterworth & Co. (Publishers) Ltd,
Guildford, Surrey, GB; H. AL-RIAHI:
"Software-controlled memory duplication"

(56) Entgegenhaltungen:
IBM TECHNICAL DISCLOSURE BULLETIN,
Band 14, Nr. 11, April 1972, Seiten 3423-3424,
New York, US; R.A. LEPPALA: "Overlapped
dual-access instruction store"
IBM TECHNICAL DISCLOSURE BULLETIN,
Band 29, Nr. 2, Juli 1986, Seiten 924-926, New
York, US; "Memory expansion for microprocessor"

(73) Patentinhaber: Siemens Aktiengesellschaft
Wittelsbacherplatz 2
W-8000 München 2 (DE)

(72) Erfinder: Benzel, Hartmut, Dipl.-Ing.
Am Karlschacht 3
W-8450 Amberg (DE)
Erfinder: Macht, Helmut, Dipl.-Ing.
Portnerstrasse 2
W-8450 Amberg (DE)

## Beschreibung

Die Erfindung bezieht sich auf eine Anordnung zur Erweiterung eines Befehlsspeicherbereichs für einen Mikroprozessor mit einem Adreßbus, bestehend aus m Einzelleitungen, wobei einem ersten Speicherblock ein zweiter den verfügbaren Speicherbereich erweiternder Speicherblock hinzugefügt ist und in den Speicherblöcken Programmbefehle, bestehend aus einem Operationscode und einem oder mehreren Parametern, gespeichert sind, mit einer Umschalteinrichtung, die abhängig von einem Kennzeichen den Zugriff des Mikroprozessors auf die Befehle in dem ersten oder zweiten Speicherblock steuert.

Eine Anordnung zur Erweiterung eines Befehlsspeicherbereiches der vorgenannten Art ist aus der DE-OS 2656004 bekannt. Der hier beschriebene Zugriff auf einen zusätzlichen, den verfügbaren Speicherbereich erweiternden, Speicherblock erfordert eine Erweiterung des Adreßbereichs zur direkten Adressierung. Hierbei verfügt ein Mikroprozessor über einen Mikroprogrammspeicher, der die Information über den von dem Mikroprozessor anzusteuernden Speicherblock enthält und der ein entsprechendes Kennzeichen auf einer vom Mikroprozessor zum Mikroprogrammspeicher führenden Leitung erzeugt, wobei das Kennzeichen nach Auswertung in einer Umschaltelogik den Zugriff auf den jeweils benötigten Speicherblock bewirkt.

Die aus der DE-OS 2645044 bekannte Schaltungsanordnung zur direkten Adressierung eines Speichers durch einen Rechner ermöglicht mit einer vorgegebenen Anzahl von direkten Adreßleitungen den adressierbaren Speicherbereich zu verdoppeln. Dabei können beispielsweise mit 16 Adreßleitungen zweimal 64 K-Speicherstellen adressiert werden, wobei der Speicher in zwei Blöcke geteilt ist. Jeder Block enthält m-Stellen von Informationsspeichern. Die mit dem Rechner verbundenen m direkten Adreßleitungen sind über eine von Blockauswahlsignalen steuerbare Umschaltlogik mit m Adressierungseingängen der m Stellen des ausgewählten Blockes verbindbar. Die Blockauswahlsignale werden in einem Festwertspeicher abhängig vom ersten Teil eines Maschinenbefehls erzeugt, wobei die Adresse der Stelle abhängig vom zweiten Teil des Maschinenbefehls erzeugt wird.

Der Erfindung liegt die Aufgabe zugrunde, durch Erweiterung des Befehlsspeicherbereichs die Abspeicherung und Bearbeitung von Befehlsfolgen zu ermöglichen, wobei der erforderliche Befehlsspeicherbereich größer ist als der verfügbare Adreßbereich. Diese Aufgabe wird bei einer Anordnung der obengenannten Art auf einfache Weise dadurch gelöst, daß die Programmbefehle aus einer geradzahligen Anzahl von Bytes bestehen und im ersten adressierten Byte jedes Befehls der Operationscode steht, daß der Mikroprozessor ein Steuersignal (Instruction Fetch) erzeugt, womit das Holen eines Befehls eingeleitet wird, und daß die Umschalteinrichtung derart gestaltet ist, daß bei der Abarbeitung der Befehle die Umschalteinrichtung nach Holen eines Befehls oder einer aus mehreren Befehlen bestehenden Befehlsfolge aus einem der beiden Speicherblöcke in den Mikroprozessor unter Zuhilfenahme des Steuersignals nach Auswertung des logischen Zustands des Adreßbusses auswählt, auf welchen der beiden Speicherblöcke der Mikroprozessor zum Holen des nächsten Befehls oder der nächsten Befehlsfolge zugreift, wobei zur Auswahl eines der beiden Speicherblöcke ihr Kennzeichen darin besteht, daß die Anfangsadresse der Befehle oder Befehlsfolgen in einem der beiden Speicherblöcke stets gerade und in dem anderen Speicherblock stets ungerade ist.

Durch den Gegenstand der Erfindung wird vermieden, daß durch Umschaltung zwischen den beiden Speicherblöcken ein Zeitverlust bei der Abarbeitung von Befehlsfolgen entsteht ; denn bereits während der Ausführung eines Befehls oder einer Befehlsfolge erfolgt eine mögliche Umschaltung der Speicherblöcke zum Zugriff auf den nächsten gespeicherten Befehl oder die nächste Befehlsfolge. Die hierbei wirksame Umschalteinrichtung ist nur als eine Weiche anzusehen, die innerhalb der Befehlsausführung des zuletzt geholten Befehls gestellt wird. Dadurch, daß zur Unterscheidung der beiden Speicherblöcke einerseits gerade und andererseits ungerade Adressen der Operationscodes dienen und daneben keine zusätzlichen Kennzeichen erforderlich sind, läßt sich die Umschalteinrichtung einfach und mit wenig Aufwand gestalten. Sind in jedem der beiden Speicherblöcke bis zu $2^m$ Speicherzellen ansprechbar, ergibt sich hierdurch maximal eine Verdoppelung des Befehlsspeicherbereichs gegenüber einem ersten ursprünglichen Speicherblock mit $2^m$ ansprechbaren Speicherzellen. Ist ein Datenspeicher vorgesehen, in dem eine Liste mit den Anfangsadressen der Befehlsfolgen der beiden Speicherblöcke abgespeichert ist, so ist hiermit eine übersichtliche Verwaltung der Anfangsadressen möglich und die Befehlsabarbeitung ist leichter. Durch den Zugriff des Mikroprozessors auf die Liste im Datenspeicher kann bei einem Sprungbefehl zu einem nicht direkt folgenden Befehl durch Auswertung des letzten Adreßbits schnell entschieden werden, ob eine Umschaltung des Mikroprozessors zu dem gegenwärtig nicht angewählten Speicherblock notwendig ist oder nicht. Ist die Umschalteinrichtung ein Teil einer speicherprogrammierbaren Steuerung, die aus einem Mikroprozessor, einem Speicher zur Abspeicherung seines Betriebssystems und einem oder mehreren kundenspezifischen Schaltkreisen besteht, die als Coprozessoren fungieren und die in einem Speicher, bestehend aus den beiden Speicherblöcken, gespeicherte Befehlsfolge abarbeiten, wobei die Umschalteinrichtung dafür sorgt, daß der Zugriff der kundenspezifischen Schaltkreise auf den gewünschten Speicherblock erfolgt, so kann sie auch in einer speicherprogrammierbaren Steuerung zur Erweiterung des Befehlsspeicherbereichs vorteilhaft genutzt werden.

Weist die Umschalteinrichtung einen ersten integrierten Schaltkreis, einen zweiten integrierten Schaltkreis und einen dritten integrierten Schaltkreis auf, und verfügt der erste Schaltkreis über einen ersten, einen zweiten und einen dritten Eingangsanschluß sowie über einen ersten und einen zweiten Ausgangsanschluß, wobei der erste Eingangsanschluß zur Zuführung des logischen Wertes einer der m Einzelleitungen des Adreßbusses dient, der zweite Eingsanschluß zur Zuführung eines Steuersignals von einem der kundenspezifischen Schaltkreise dient und der dritte Eingangsanschluß zur Eingabe eines Resetimpulses vorgesehen ist und wobei der erste Ausgangsanschluß des ersten Schaltkreises mit dem zweiten oder dritten Schaltkreis und der zweite Ausgangsanschluß mit dem dritten oder zweiten Schaltkreis verbunden ist und der zweite und dritte Schaltkreis eingangsseitig miteinander verbunden ist, wobei über diesen Verbindungspunkt ein Bausteinfreigabesignal zugeführt wird und wobei die Umschalteinrichtung über den zweiten und dritten Schaltkreis mit den Speicherblöcken verbunden ist, so ist durch diese Anordnung die Umschalteinrichtung in einfacher Weise gestaltet und der zur Umschaltung erforderliche Aufwand für den Signalverkehr bleibt gering. Weiterhin tritt kein Zeitverlust durch das Umschalten zwischen den beiden Speicherblöcken auf, sondern die Bearbeitung für eine in einem Speicherblock abgespeicherte Befehlsfolge dauert genauso lange wie für dieselbe, aber in beiden Speicherblöcken wechselweise in Teilen abgespeicherte Befehlsfolge.

In der Zeichnung ist ein Ausführungsbeispiel der Erfindung dargestellt, das im folgenden näher beschrieben ist.

Es zeigen :

FIG 1    eine Anordnung zur Verdopplung des Befehlsspeicherbereiches eines Mikroprozessors,

FIG 2    die Speicherplatzbelegung des aus zwei Speicherblöcken bestehenden Speichers mit zur Erweiterung des Befehlsspeicherbereichs unterschiedlich abgespeicherten Befehlen,

FIG 3    ein zeitliches Ablaufdiagramm für das Holen und Abarbeiten von Befehlen im Mikroprozessor,

FIG 4    eine Anordnung einer Umschalteinrichtung für einen in seinem Befehlsspeicherbereich erweiterten Speicher.

FIG 5    eine Anordnung einer speicherprogrammierbaren Steuerung mit einer Umschalteinrichtung für einen in seinem Befehlsspeicherbereich erweiterten Speicher.

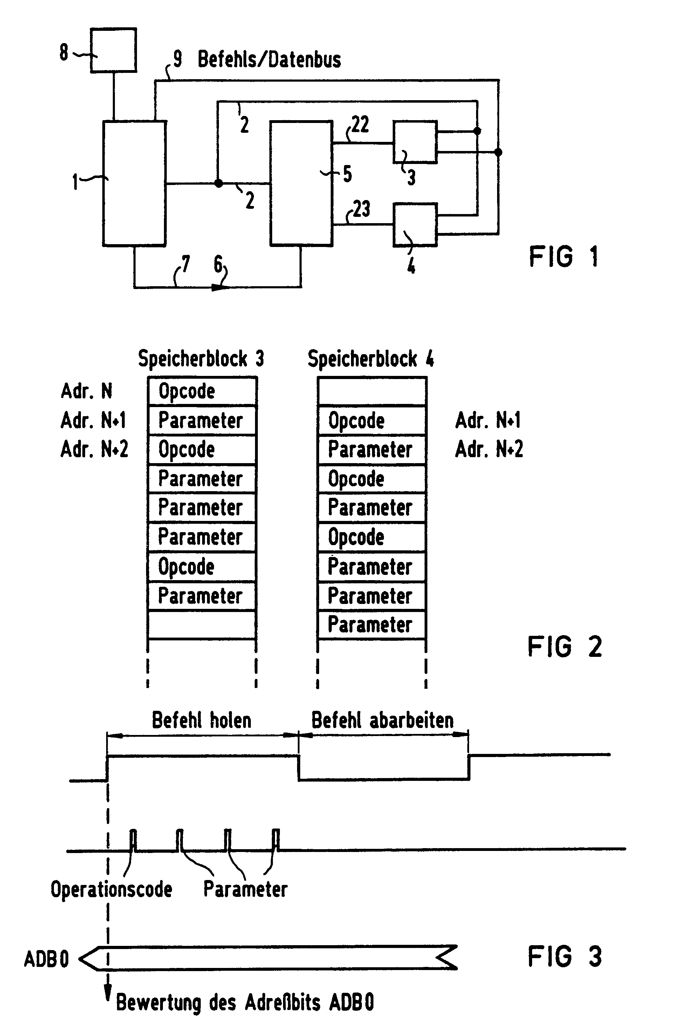

Die in FIG 1 dargestellte Anordnung zur Erweiterung eines Befehlsspeicherbereichs für einen Mikroprozessor 1 besteht aus einem ersten Speicherblock 3, einem zweiten Speicherblock 4, einer Umschalteinrichtung 5, die eine Verbindungsleitung 7 zum Mikroprozessor 1 besitzt, einem Datenspeicher 8 und einem Datenbus 9. Der Mikroprozessor 1 leitet über die Verbindungsleitung 7 an die Umschalteinrichtung 5 ein logisches Steuersignal 6, das als Pfeil dargestellt ist. Abhängig von dem logischen Steuersignal 6 und dem logischen Signalzustand auf einer Adreßleitung 2 wählt die Umschalteinrichtung 5 einen der beiden Speicherblöcke 3, 4 an. Der Datenspeicher 8 enthält eine Liste mit den Anfangsadressen der in den Speicherblöcken 3 und 4 abgespeicherten Befehlsfolgen. Der Mikroprozessor 1 greift auf die Liste im Datenspeicher 8 zu, wenn ein Sprungbefehl zu einer anderen Befehlsfolge vorliegt. Die Erweiterung des Befehlsspeicherbereichs erfolgt unter folgenden Voraussetzungen : In den beiden Speicherblöcken 3, 4 sind die Befehle von einem oder mehreren Programmen oder Befehlsfolgen abgespeichert. Die Befehle bestehen aus zwei oder vier Bytes, wobei im ersten Byte stets der Operationscode steht und die restlichen Bytes die Parameter der Befehle darstellen. Die Operationscodes der Befehle liegen in einem der beiden Speicherblöcke 3, 4 stets auf geraden und in dem anderen Speicherblock 4, 3 stets auf ungeraden Adressen, siehe FIG 2. Es sei angenommen, daß die Operationscodes der Befehle im Speicherblock 3 auf geraden Adressen liegen und die Operationscodes der Befehle im Speicherblock 4 auf ungeraden Adressen liegen. Der Zugriff des Mikroprozessors 1 z.B. auf den Speicherblock 3 bleibt solange bestehen wie die Operationscodeadressen der Befehle gerade sind und keine Anweisung zu einem Sprung zu einem anderen Programm oder Programmteil vorliegt. Wird dagegen ein Sprungbefehl zu einem anderen Programm oder Programmteil erreicht, so holt sich der Mikroprozessor 1 aus dem Datenspeicher 8 die Anfangsadresse des im Sprungbefehl genannten und folgenden Programms oder der Befehlsfolge. Der Mikroprozessor 1 gibt vor dem Holen eines Befehls über die Verbindungsleitung 7 das logische Steuersignal 6 an die Umschalteinrichtung 5 (siehe FIG 3). Daraufhin wertet die Umschalteinrichtung den logischen Wert auf dem Adreßbus 2 aus und schaltet die gegenwärtige Ansteuerung eines der beiden Speicherblöcke 3, 4 um oder behält sie bei. Die Besonderheit der vorgenannten und folgenden Ausführungsformen besteht darin, daß sämtliche Befehle zwei oder vier Byte lang sind, wodurch eine Verdopplung des Befehlsspeicherbereichs von ursprünglich einem Speicherblock durch einen weiteren ermöglicht wird.

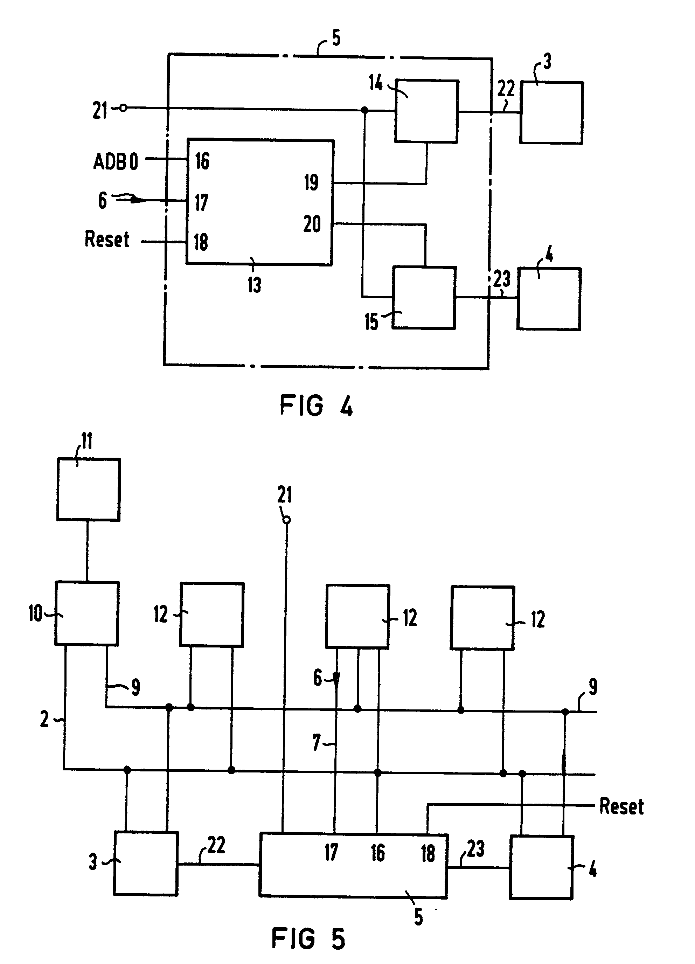

In FIG 4 ist eine der FIG 1 äquivalente Anordnung einer Umschalteinrichtung 5 für einen in seinem Befehlsspeicherbereich erweiterten Speicher dargestellt. Die Umschalteinrichtung 5 besteht hier aus einem ersten integrierten Schaltkreis 13 (IC) einem zweiten integrierten Schaltkreis 14 (IC) und einem dritten integrierten Schaltkreis 15 (IC). Der erste Schaltkreis 3 ist unter der Typenbezeichnung 74 HC 74 bekannt. Er ist z.B. angegeben als MM 74 HC 74 im National Semiconductor Logic Data Book Vol. I/1984, (S. 3-56). Im selben Datenbuch (S. 3-43) ist der Schaltkreis MM 74 HC 32 aufgeführt, der zum Schaltkreistyp 74 HC 32 gehört. Schaltkreise des Typs 74 HC 32 werden als Schaltkreise 14 und 15 verwendet. Der erste Schaltkreis 13 weist einen ersten 16, einen zweiten 17 und einen dritten 18 Eingangsanschluß sowie einen ersten 19, einen zweiten 20 Ausgangsanschluß auf. Der erste Ausgangsanschluß 19 ist mit einem der beiden Schaltkreise 14, 15 und der zweite Ausgangsanschluß 20 mit dem anderen Schaltkreis 15, 14 verbunden. Die beiden Schaltkreise 14, 15 sind in einem Verbindungspunkt miteinander elektrisch verbunden, dem ein Bausteinfreigabesignal 21 zugeführt wird. An den Schaltkreis 14 ist der Speicherblock 3 und an den Schaltkreis 15 der Speicherblock 4 angeschlossen. In den beiden Speicherblöcken 3, 4 sind Befehle abgespeichert, auf die ein hier nicht dargestellter Mikroprozessor oder Coprozessor zugreift, wobei die Umschalteinrichtung 5 die Anwahl eines der beiden Speicherblöcke 3, 4 vornimmt. Während der Mikroprozessor oder Coprozessor aus einem der beiden Speicherblöcke 3, 4 einen Befehl holt, gibt er ein Steuersignal 6 an den zweiten Eingangsanschluß 17 des Schaltkreises 13. Kurz nachdem die Adresse des Befehls vom Mikroprozessor oder Coprozessor ausgegeben wurde, wechselt das Steuersignal 6 von niedrigem auf hohen Pegel. Die Flanke wird benutzt, um den logischen Wert des niederwertigsten Adreßbits ADB0 des Adreßbusses 2 über den ersten Eingangsanschluß 16 des Schaltkreises 13 in diesem abzuspeichern. Die Verknüpfung des Bausteinfreigabesignals 21 mit dem gespeicherten logischen Wert des Adreßbits ADB0 im Schaltkreis 13 bewirkt die Auswahl eines der beiden Speicherblöcke 3, 4. Das Steuersignal 6 am zweiten Eingangsanschluß 17 des Schaltkreises 13 bleibt auf hohem Pegel während der Operationscode und der oder die Parameter des Befehls aus einem der beiden Speicherblöcke 3, 4 gelesen werden. Es wechselt erst wieder vor der Befehlsausführung auf einen niedrigen Pegel. Ein Umschalten zwischen den beiden Speicherblöcken 3, 4 kann erst wieder vor dem Holen des nächsten Befehls erfolgen.

FIG 5 zeigt die Umschalteinrichtung 5 in der Anordnung einer speicherprogrammierbaren Steuerung. Speicherprogrammierbare Steuerungen SPS sind z.B. aus dem Katalog SIEMENS SIMATIC S5 Automatisierungsgerät S5-115U ST 52.3. 1987 bekannt. Wesentliche Bestandteile einer SPS sind ein Mikroprozessor 10, ein zugehöriger Speicher 11 und ein oder mehrere kundenspezifische Schaltkreise 12. Die Umschalteinrichtung 5 ist, wie in den FIG 1 und 4, mit den Speicherblöcken 3, 4 in Verbindung gebracht. Der Mikroprozessor 10, die kundenspezifischen Schaltkreise 12, die Umschalteinrichtung 5 und die Speicherblöcke 3, 4 sind einerseits über einn Adreßbus 2 und andererseits über eine Datenbus 9 miteinander verbunden. Die Umschalteinrichtung 5 ist in der in FIG 4 dargestellten Weise aufgebaut. Sie erhält das Steuersignal 6, mit dem die Bewertung des logischen Zustands auf dem Adreßbus 2 eingeleitet wird, von einem der kundenspezifischen Schaltkreise 12. Aufgrund der Bewertung in der Umschalteinrichtung 5 wählt diese, auf welchen der beiden Speicherblöcke 3 und 4 zugegriffen wird. Die Anwahl der Speicherblöcke 3 und 4 erfolgt über Steuerleitungen 22, 23.

Der Gegenstand der Erfindung läßt sich vorteilhaft und einfach auf die in der vorgenannten SPS eingesetzten kundenspezifischen Schaltkreise 12 anwenden, die besondere Eigenschaften aufweisen. Der Aufbau der Schaltkreise 12 ist der DE 3508984 A1 zu entnehmen. Die bisherigen Lösungen der Speicherbereichserweiterung durch Erweiterung des Adreßbereiches, in der Literatur unter Banking- und Paging-Verfahren bekannt, sind dagegen in Verbindung mit den kundenspezifischen Schaltkreisen 12 zur Benutzung ungeeignet, da die Schaltkreise 12 entsprechend umgestaltet werden müßten. Außerdem haben sie den Nachteil, daß durch das Umschalten zwischen zwei Speicherblöcken die Bearbeitungsdauer der Befehle verlängert wird.

## Patentansprüche

1. Anordnung zur Erweiterung eines Befehlsspeicherbereichs für einen Mikroprozessor (1) mit einem Adreßbus (2), bestehend aus m Einzelleitungen, wobei einem ersten Speicherblock (3) ein zweiter den verfügbaren Speicherbereich erweiternder Speicherblock (4) hinzugefügt ist und in den Speicherblöcken (3 und 4) Programmbefehle, bestehend aus einem Operationscode und einem oder mehreren Parametern, gespeichert sind, mit einer Umschalteinrichtung (5), die abhängig von einem Kennzeichen den Zugriff des Mikroprozessors (1) auf die Befehle in dem ersten (3) oder zweiten (4) Speicherblock steuert, **dadurch gekennzeichnet,** daß die Programmbefehle aus einer geradzahligen Anzahl von Bytes bestehen und im ersten adressierten Byte jedes Befehls der Operationscode steht, daß der Mikroprozessor (1) ein Steuersignal (6) erzeugt, womit das Holen eines Befehls eingeleitet wird, und daß die Umschalteinrichtung (5) derart gestaltet ist, daß bei der Abarbeitung der Befehle die Umschalteinrichtung (5) nach Holen eines Befehls oder einer aus mehreren Befehlen bestehenden Befehlsfolge aus einem der beiden Speicherblöcke (3, 4) in den Mikroprozessor (1) unter Zuhilfenahme des Steuersignals (6) nach Auswertung des logischen Zustands des Adreßbusses (2) auswählt, auf welchen der beiden Speicherblöcke (3, 4) der Mikroprozessor (1) zum Holen des nächsten Befehls oder der nächsten Befehlsfolge zugreift, wobei zur Auswahl eines der beiden Speicherblöcke (3, 4) ihr Kennzeichen darin besteht, daß die Anfangsadresse der Befehle oder Befehlsfolgen in einem der beiden Speicherblöcke (3, 4) stets gerade und in dem anderen Speicherblock (4, 3) stets ungerade ist.

2. Anordnung nach Anspruch 1, **dadurch gekennzeichnet,** daß in jedem der beiden Speicherblöcke (3, 4) bis zu $2^m$ Speicherzellen ansprechbar sind.

3. Anordnung nach einem der vorhergehenden Ansprüche 1 oder 2, **dadurch gekennzeichnet,** daß ein Datenspeicher (8) vorgesehen ist, in dem eine Liste mit den Anfangsadressen der Befehlsfolgen der beiden Speicherblöcke (3, 4) abgespeichert ist.

4. Anordnung nach einem der vorhergehenden Ansprüche 1 bis 3, **dadurch gekennzeichnet,** daß die Umschalteinrichtung (5) ein Teil einer speicherprogrammierbaren Steuerung ist, die aus einem Mikroprozessor (10), einem Speicher (11) zur Abspeicherung seines Betriebssystems und einem oder mehreren kundenspezifischen Schaltkreisen (12) besteht, die als Coprozessoren fungieren und die in einem Speicher, bestehend aus den beiden Speicherblöcken (3, 4), gespeicherte Befehlsfolge abarbeiten und wobei die Umschalteinrichtung (5) dafür sorgt, daß der Zugriff der kundenspezifischen Schaltkreise (12) auf den ge wünschten Speicherblock (3 oder 4) erfolgt.

5. Anordnung nach Anspruch 4, **dadurch gekennzeichnet,** daß die Umschalteinrichtung (5) einen ersten integrierten Schaltkreis (13), einen zweiten integrierten Schaltkreis (14) und einen dritten integrierten Schaltkreis (15) aufweist und der erste Schaltkreis (13) über einen ersten (16), einen zweiten (17) und einen dritten (18) Eingangsanschluß sowie über einen ersten (19), einen zweiten (20) Ausgangsanschluß verfügt, wobei der erste Eingangsanschluß (16) zur Zuführung des logischen Wertes (Adreßbit ADB0) einer der m Einzelleitungen des Adreßbusses (2) dient, der zweite Eingangsanschluß (17) zur Zuführung eines Steuersignals (Pfeil 6) von einem der kundenspezifischen Schaltkreise (12) dient und der dritte Eingangsanschluß (18) zur Eingabe eines Resetimpulses vorgesehen ist und wobei der erste Ausgangsanschluß (19) mit einem der beiden Schaltkreise (14, 15) und der zweite Ausgangsanschluß (20) mit dem anderen Schaltkreis (15, 14) verbunden ist und die beiden Schaltkreise (14, 15) eingangsseitig miteinander verbunden sind, wobei über diesen Verbindungspunkt ein Bausteinfreigabesignal (21) zugeführt wird und wobei die Umschalteinrichtung (5) über ihre beiden ICs (14, 15) mit den Speicherblöcken (3, 4) verbunden ist.

## Claims

1. An arrangement for extending a command memory region for a microprocessor (1) with an address bus (2), consisting of m single lines, wherein added to a first memory array (3) there is a second memory array (4), extending the available memory region, and stored in the memory arrays (3 and 4) there are program commands, consisting of an operation code and one or several parameters, with a switch over device (5), which controls, in dependence on an identifier, the access of the microprocessor (1) to the commands in the first (3) or second (4) memory array, characterised in that the program commands consist of an even number of bytes, and in the first adressed byte of each command the operation code is stored that the microprocessor (1) generates a control signal (6), whereby the fetching of a command is initiated, and in that the switch over device (5) is designed such that with the execution of the commands after fetching a command or a series of commands consisting of several commands the switchover device (5) selects from one or both memory arrays (3, 4) in the microprocessor (1), with the aid of the control signal (6), after evaluating the logic state of the address bus (2) which of the two memory arrays (3, 4) the microprocessor (1) accesses for fetching the next command or the next series of commands, whereby for selecting one of the two memory arrays (3, 4) its identifier consists in that the initial address of the commands or series of commands in one or both memory arrays (3, 4) is always even and in the other memory array (3, 4) is always uneven.

2. An arrangement according to claim 1, characterised in that in each of the two memory arrays (3, 4) up to $2^m$ memory cells are addressable.

3. An arrangement according to one of the preceding claims 1 or 2, characterised in that a data memory (8) is provided, in which a list with the initial addresses of the command series of both memory arrays (3, 4) is stored.

4. An arrangement according to one of the preceding claims 1 to 3, characterised in that the switch over device (5) is a part of a storage-programmable control, which consists of a microprocessor (10), a memory (11) for storing its operational system and one or several customer-specific integrated circuits (12), which function as comprocessors and which execute the series of commands stored in a memory, consisting of both memory arrays (3, 4), and wherein the switch over device (5) provides that the access of the customer-specific integrated circuits (12) to the desired memory array (3 or 4) takes place.

5. An arrangement according to claim 4, characterised in that the switch over device (5) has a first integrated circuit (13), a second integrated circuit (14) and a third integrated circuit (15), and the first integrated circuit (13) disposes of a first (16), a second (17) and a third (18) input connection as well as a first (19) and a second (20) output connection, wherein the first input connection (16) serves to supply the logic value (address bit ADB0) of one of the m single lines of the address bus (2), the second input connection (17) serves to supply a control signal (arrow 6) from one of the customer-specific integrated circuits (12) and the third input connection (18) is provided for the input of a reset impulse, and wherein the first output connection (19) is connected to one of the two integrated circuits (14, 15) and the second output connection (20) to the other integrated circuit (15, 14) and both integrated circuit (14, 15) are connected to each other on the input side, wherein a module release signal (21) is supplied by way of this connecting point, and wherein the switch over device (5) is connected by way of its two ICs (14, 15) to the memory arrays (3, 4).

## Revendications

1. Dispositif d'extension d'une zone de mémoire d'instructions pour un microprocesseur (1), comportant un bus de transmission d'adresses (2), constitué par m conducteurs individuels, et dans lequel à un premier bloc de mémoire (3) est adjoint un second bloc de mémoire (4) qui étend la zone de mémoire disponible, et des instructions de programme, constituées par un code opération et un ou plusieurs paramètres, sont mémorisées dans les blocs de mémoire (3 et 4), et comportant un dispositif de commutation (5), qui, en fonction d'un signal caractéristique, commande l'accès du microprocesseur (1) aux instructions situées dans le premier bloc de mémoire (3) ou dans le second bloc de mémoire (4), caractérisé par le fait que les instructions de programme sont constitués par un nombre pair d'octets et que le code opération est situé dans le premier octet adressé de chaque instruction, que le microprocesseur (1) produit un signal de commande, au moyen duquel l'appel d'une instruction est déclenché, et que le dispositif de commutation (5) est agencé de telle sorte que, lors de l'élaboration des instructions, après l'appel d'une instruction ou d'une suite d'instructions, constituée de plusieurs instructions, à partir de l'un des deux blocs de mémoire (3, 4) dans le microprocesseur (1) et en s'aidant du signal de commande après l'évaluation de l'état logique du bus de transmission d'adresses (B), le dispositif de commutation (5) sélectionne celui des deux blocs de mémoire (3, 4), auquel le processeur (1) accède pour l'appel de l'instruction immédiatement suivante ou de la suite d'instructions immédiatement suivante, le signal caractéristique utilisé pour la sélection de l'un des deux blocs de mémoire (3, 4) consistant en ce que l'adresse de départ des instructions ou des suites d'instructions est toujours paire dans l'un des deux blocs de mémoire (3, 4) et est toujours impaire dans l'autre bloc de mémoire (4, 3).

2. Dispositif suivant la revendication 1, caractérisé par le fait que jusqu'à $2^m$ cellules de mémoire peuvent être appelées dans chacun des deux blocs de mémoire (3, 4).

3. Dispositif suivant l'une des revendications précédentes 1 ou 2, caractérisé par le fait qu'il est prévu une mémoire de données (8), dans laquelle est mémorisée une liste indiquant les adresses de départ des suites d'instructions des deux blocs de mémoire (3, 4).

4. Dispositif suivant l'une des revendications précédentes 1 à 3, caractérisé par le fait que le dispositif de commutation (5) forme une partie d'une unité de commande programmable en mémoire, qui est constituée par un microprocesseur (10), une mémoire (11) servant à mémoriser son système d'exploitation et un ou plusieurs circuits (12) spécifiques au client, qui fonctionnent en tant que coprocesseurs et élaborent la suite d'instructions mémorisée dans une mémoire, constituée par les deux blocs de mémoire (3, 4), le dispositif de commutation (5) veillant à ce que l'accès aux circuits spécifiques aux clients s'effectue dans le bloc de mémoire désiré (3 ou 4).

5. Dispositif suivant la revendication 4, caractérisé par le fait que le dispositif de commutation (5) comporte un premier circuit intégré (13), un second circuit intégré (14) et un troisième circuit intégré (15) et que le premier circuit (13) dispose d'une première borne d'entrée (16), d'une seconde borne d'entrée (17) et d'une troisième borne d'entrée (18) ainsi que d'une première borne de sortie (19) et d'une seconde borne de sortie (20), la première borne d'entrée (16) sert à l'envoi de la valeur logique (bit d'adresse ADB0) à l'un des m conducteurs individuels du bus de transmission d'adresses (2), que la seconde borne d'entrée (17) sert à l'envoi d'un signal de commande (flèche 6) par l'un des circuits (12) spécifiques au client, que la troisième borne d'entrée (18) est prévue pour l'introduction d'une impulsion de remise à l'état initial, que la première borne de sortie (19) est raccordée à l'un des deux circuits (14, 15), que la seconde borne de sortie (20) est raccordée à l'autre circuit (15, 14) et que les deux circuits (14, 15) sont raccordés entre eux côté entrée, auquel cas un signal (21) de libération de module est envoyé par l'intermédiaire de ce point de liaison, et le dispositif de commutation (5) est raccordé par l'intermédiaire de ces deux circuits intégrés (14, 15) aux blocs de mémoire (3, 4).

FIG 1

Speicherblock 3    Speicherblock 4

| | |
|---|---|
| Adr. N | Opcode |
| Adr. N+1 | Parameter |
| Adr. N+2 | Opcode |

FIG 2

Befehl holen    Befehl abarbeiten

Operationscode    Parameter

ADB 0

Bewertung des Adreßbits ADB 0

FIG 3

FIG 4

FIG 5